# EUROPEAN PATENT SPECIFICATION

(11) **EP 4 180 276 B1**
(45) Date of publication and mention of the grant of the patent: **13.08.2025**
(21) Application number: 20943936.3
(22) Date of filing: 10.07.2020
(51) Int. Cl.: B60R 19/34

(54) **COLLAPSIBLE REAR BUMPER INNER SUPPORT, REAR BUMPER, AND VEHICLE**
ZUSAMMENKLAPPBARE INNERE STÜTZE FÜR HINTEREN STOSSFÄNGER, HINTERER STOSSFÄNGER UND FAHRZEUG
SUPPORT INTERNE PLIABLE DE PARE-CHOCS ARRIÈRE, PARE-CHOCS ARRIÈRE ET VÉHICULE

(43) Date of publication of application: 17.05.2023
(73) Proprietor: Zhejiang Zeekr Intelligent Technology Co., Ltd, Ningbo, Zhejiang 315899 (CN); Zhejiang Geely Holding Group Co., Ltd., Hangzhou, Zhejiang 310051 (CN)
(72) Inventor: CHENG, Gaochao, Hangzhou Bay New District Ningbo, Zhejiang 315336 (CN); WANG, Weizhi, Hangzhou Bay New District Ningbo, Zhejiang 315336 (CN); TIAN, Yishen, Hangzhou Bay New District Ningbo, Zhejiang 315336 (CN); WEI, Liang, Hangzhou Bay New District Ningbo, Zhejiang 315336 (CN); KANG, Chengpeng, Hangzhou Bay New District Ningbo, Zhejiang 315336 (CN)
(74) Representative: Zaboliene, Reda
(86) International application number: PCT/CN2020/101363
(87) International publication number: WO 2022/006861

(56) References cited:
- EP-A1- 3 135 949
- EP-A2- 1 647 455
- EP-A2- 1 647 455
- EP-A2- 2 441 626
- EP-B1- 2 783 922
- WO-A1-2020/086032
- CN-A- 102 485 547
- CN-U- 204 845 823
- DE-A1- 102015 217 465
- DE-A1- 102018 105 689
- GB-A- 2 551 261
- JP-A- 2009 280 141

## Description

### TECHNICAL FIELD

The present disclosure relates to vehicle components, in particular to a collapsible inner support for rear bumper, a rear bumper and a vehicle.

### BACKGROUND

With the development of the automobile market, new technologies and new functions are constantly emerging, consumers will pay more and more attention to vehicle safety, and vehicle insurance costs are gradually linked to vehicle maintenance costs. Currently, there are professional insurance institutions in many countries around the world to carry out research in this area, such as China Insurance Research Institute (C-|AS|) and Insurance Institute for Highway Safety (IIHS) in the United States, Thatcham Research in Britain, and AZT Automotive GmbH in Germany, all of which are affiliated to an international institution named Automobile Repair Research Committee of Research Council of Automobile Repairs (RCAR). It was jointly established by the insurance industry in various countries to develop testing standards and study the cost of vehicle maintenance. At present, these institutions all include collision tests on crashworthiness and maintenance economy. Its crash score will be directly applied to the insurance pricing of the vehicle by the insurance company. Consumers will also refer to the scores when purchasing vehicles to find out whether the subsequent maintenance costs of the vehicle are within their own tolerance. For OEMs, they need to improve the safety performance of their vehicles and reduce the damage to key components of the vehicle.

For the collision test of the rear portion of the vehicle, it mainly simulates low-speed rear impact conditions: front collision of the rear bumper at 10km/h and 40% offset collision test at 15km/h. At present, most of the models on the market have low scores in this item. In order to reduce maintenance costs, the design idea is mainly to protect the rear wall metal panel, the back door metal panel, lamps, cameras, sensors, and other components that are difficult to repair or have high unit costs from damage.

As a necessary component for installation of the rear bumper, the influence of the rear bumper inner support on the rear collision is particularly important. At present, most of the rear bumper inner support are plastic brackets. In addition to meeting the basic fixing requirements of the rear bumper, it can also provide reliable support in Z direction, thereby preventing damage to the rear bumper mask caused by the user stepping on the upper surface of the rear bumper by mistake when picking up and placing items. However, due to the large impact energy generated during the rear collision, the rear bumper inner support cannot effectively absorb the impact energy, which causes most of the energy to be transmitted to the vehicle body through the rear bumper inner support, resulting in the deformation of the rear wall metal panel of the vehicle body.

Therefore, in order to overcome or at least alleviate the above-mentioned defects in the prior art, it is necessary to propose an improved inner support for rear bumper.

DE 102015217465A1 provides to an arrangement 42 of a guide part 40 extending in the transverse direction of the vehicle by means of at least one holder 10 on a bumper cross member 38 which can be produced and assembled simply and inexpensively. The holder 10 is designed as a plug-on element that is open on one side and comprises a base body 30 with a first free end 12 and at least one second free end 14 for engaging around fastening sections of the bumper cross member 38. The guide part 40 includes a plurality of openings 56 and a plurality of elastic clip elements 60 for being clasped into the openings 56. The guide part 40 further includes a plurality of ribs 62 extending in the vertical direction of the vehicle and running from a rear wall 64 to a front wall 66. These ribs 62 allow elastic deformability of the guide part 40 in the area between the front wall 66 and the rear wall 64, in particular to absorb impact forces such as those that occur when coming into contact with obstacles or other vehicles during low-speed parking. In the middle area of the guide part 40, a V-shaped design is formed between the ribs 62 extending towards the outside of the vehicle. WO02020086032A shows a crash box system comprising "V" shaped leaf springs placed between a front plate and the rear plate.

### SUMMARY

The object of the present disclosure is to provide a collapsible inner support for rear bumper, a rear bumper and vehicle, to overcome the above-mentioned defects in the prior art.

The present disclosure is achieved through the following technical solutions:

The first aspect of the present disclosure provides a collapsible inner support for rear bumper, with the features of claim 1, including a support rear face, a support front face, a plurality of collapse ribs and a pair of support side faces. The support rear face is opposite to the support front face, and the pair of support side faces are arranged symmetrically between the support rear face and the support front face. A first end of the support side face is connected to the support rear face, and a second end of the support side face is connected to the support front face. The support rear face, the support side faces and the support front face form a truss. The plurality of collapse ribs are arranged between the pair of support side faces. A first end of the collapse rib is connected to the support rear face, and a second end of the collapse rib is connected to the support front face. The rear bumper inner support is symmetrical in Y direction. Each of the plurality of collapse ribs has a V-shaped structure, and a tip of the V-shaped structure faces toward an end of the rear bumper inner support along a length direction.

Furthermore, the collapse ribs are evenly distributed along the length direction of the collapsibleinner support.

Furthermore, the support rear face, the support side faces and the support front face form a rectangular truss.

Furthermore, the support front face is provided with a positioning pin, and the positioning pin is used to position the collapsible inner support to a rear wall metal panel of a vehicle body.

Furthermore, the support front face is provided a plurality of upper installation structures for connecting with the rear wall metal panel of the vehicle body, the upper installation structure is provided a first installation hole, bolts welded on the rear wall metal panel of the vehicle body pass through the first installation holes, and are fixedly connected by fasteners.

Furthermore, the support front face is provided with a plurality of lower installation structures for connecting with the rear wall metal panel of the vehicle body, a horizontal plane where the lower installation structure locates is lower than a horizontal plane where the upper installation structure locates, and the lower installation structure is provided with a second installation hole, bolts welded on the rear panel of the vehicle body pass through the second installation holes and are fixedly connected by fasteners.

Furthermore, the upper installation structures and the lower installation structures are arranged alternately.

Furthermore, the fastener is a flange nut.

Furthermore, the support front face is provided a plurality of upper clamping structures for connecting with a rear bumper mask, and the upper clamping structure configured for engaging with a back of the rear bumper mask.

Furthermore, the support front face is provided a plurality of lower clamping structures for connecting with the rear bumper mask, a horizontal plane where the lower clamping structure locates is lower than a horizontal plane where the upper clamping structure locates, and the lower clamping structure configured for engaging with a back of the rear bumper mask.

Furthermore, the lower clamping structures and the upper clamping structures are arranged alternately.

Furthermore, it also includes a support member for supporting the collapsible inner support, a first end of the support member is connected to the support rear face, and a second end of the support member is connected to the support front face. The support member is close to the support side face.

The second aspect of the present disclosure provides a rear bumper, with the features of claim 13, which includes the above-mentioned collapsible inner support.

A third aspect of the present disclosure provides a vehicle, with the features of claim 14, which includes the above-mentioned rear bumper.

The technical solution of the present disclosure has the following advantages:
1) In the front collision test process of the rear bumper at 10km/h, the collapse ribs of the collapsible rear bumper inner support of the present disclosure can quickly collapse and fragment, absorb the impact energy, and fall off from the rear bumper inner support, releases space and absorb impact energy, have high collapse efficiency, and capable of protecting the rear wall metal panel of the vehicle body from deformation.
2) The rear bumper inner support of the present disclosure makes front contact with the collision device, and absorbs energy through rapid collapse of the collapse ribs. It has no special requirements for the tailgate parting height, and does not require to leave a large space between the rear wall metal panel and the rear bumper mask. As compared with the prior art, it improves the degree of freedom in design of the vehicle and can simultaneously meet the requirements of styling intentions, improving luggage compartment space, and the convenience of picking and placing items.
3) Compared with the prior art, the rear bumper inner support of the present disclosure is lighter in weight and lower in cost.

### BRIEF DESCRIPTION OF THE DRAWINGS

In order to illustrate the technical solutions of the present disclosure more clearly, the following will briefly introduce the accompanying drawings that are required to be used in the description of the embodiments.
Fig. 1 is a schematic structural view of a collapsible rear bumper inner support provided by an embodiment of the present disclosure;
Fig. 2 is a schematic front view of a collapsible rear bumper inner support provided by an embodiment of the present disclosure;
Fig. 3 is a schematic rear view of a collapsible rear bumper inner support provided by the embodiment of the present disclosure;
Fig. 4 is a schematic left view of a collapsible rear bumper inner support provided by the embodiment of the present disclosure;
Fig. 5 is a schematic assembled view of a collapsible rear bumper inner support provided by the embodiment of the present disclosure;
Fig. 6 is a schematic cross-sectional assembly view of a collapsible rear bumper inner support provided by the embodiment of the present disclosure;

Wherein, the reference numerals in the figure correspond to: 11-Support rear face, 12-Collapse rib, 13-Support side face, 14-Support front face, 15-Upper installation structure, 16-Positioning pin, 17-Upper clamping structure, 18-Lower clamping structure, 19-Lower installation structure, 2-Rear wall metal panel, 3-Rear bumper mask, 4-Rear anti-collision beam, 51-Lower portion of the collision device, 52-Lower portion of the collision device.

### DETAILED DESCRIPTION OF PREFERRED EMBODIMENTS

In order to make the purpose, the technical solutions and the advantages of the present disclosure more clearly, the present disclosure will be further described in detail in combination with the embodiments. Obviously, the described embodiments are only some of the embodiments of the present disclosure, rather than all of them. Based on the embodiments of the present disclosure, all other embodiments obtained by those of ordinary skill in the art without creative work will fall within the protection scope of the present disclosure.

It should be noted that in the description of the present disclosure, terms such as "first" and "second" are used to distinguish similar objects, and are not necessarily used to describe a specific order or sequence. It is to be understood that the data so used are interchangeable under appropriate circumstances such that the embodiments of the present disclosure described herein can be practiced in sequences other than those illustrated or described herein.

In the present disclosure, the orientation or positional relationship indicated by the terms "upper", "lower", "top", "bottom", etc. are based on the orientation or positional relationship shown in the drawings, and are only for the convenience of describing the present disclosure and simplifying the description , rather than indicating or implying that the device or element must have a specific orientation, be constructed and operate in a specific orientation, and thus should not be construed as limitation of the disclosure. The X direction refers to the length direction of the vehicle, the Y direction refers to the width direction of the vehicle, and the Z direction refers to the height direction of the vehicle.

In addition, unless be clearly specified and limited, terms such as "install", "connect", "link" and "fix" in the present disclosure should be interpreted in a broad sense, for example, it can be a fixed connection or a detachable connection, or integrated into a single piece; it may be directly connected, or indirectly connected through an intermediary, and may be an internal communication between two elements or an interaction relationship between two elements, unless otherwise clearly defined. For those of ordinary skill in the art the specific meanings of the above terms in the present disclosure can be understood according to specific situations.

### Embodiments

For the problem that the rear bumper inner support cannot absorb the impact energy effectively due to the impact energy generated during the rear collision of the vehicle is large, there are two common solutions at present. One solution is to raise the split position of the tailgate, ensure that the rear bumper inner support is located above the collision device, and will not contact with the collision device during the collision, but this solution will cause the tail sill of the luggage compartment to be too high, and the tail sill is about 800mm from the ground, which is inconvenient to take and place items, causes user complaints, and has a great impact on the modeling style. Another solution is to reserve enough space in X direction between the rear wall sheet metal and the rear bumper mask to ensure that the rear bumper inner support will not interfere with the collision device in case of rear collision. However, this solution will occupy the luggage compartment space and reduce the space utilization rate of the vehicle.

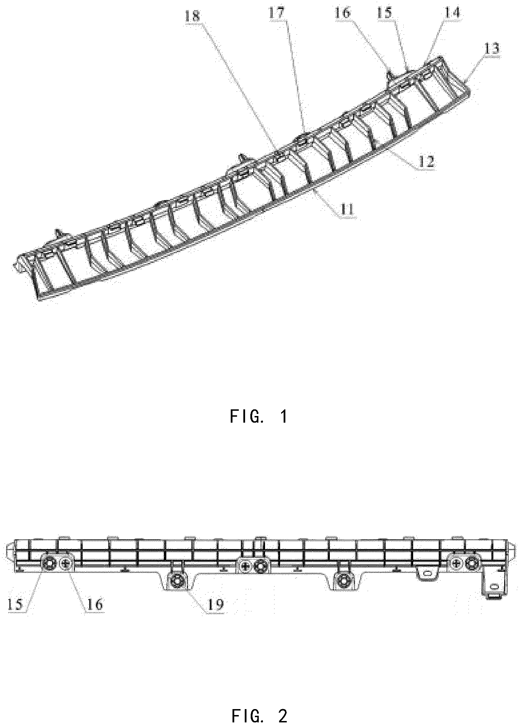

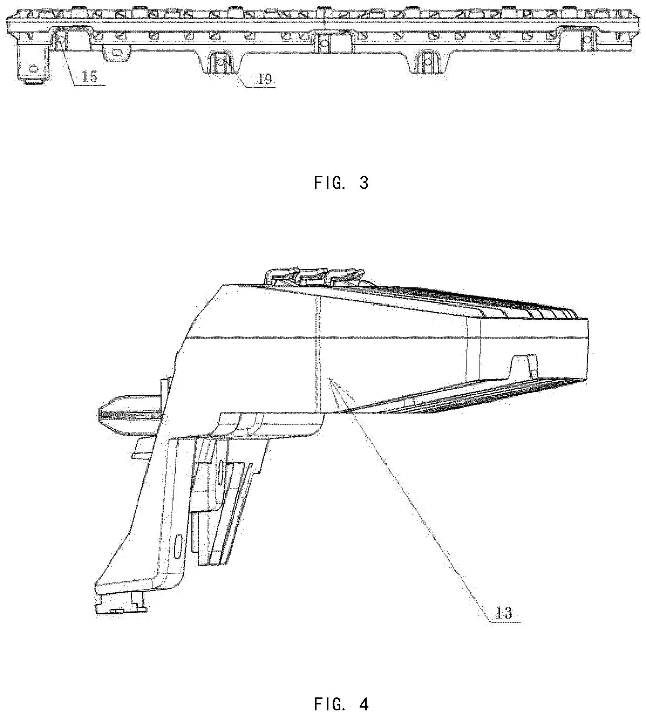

In view of the above defects, this embodiment provides a collapsible rear bumper inner support. Referring to Figs. 1-6, the collapsible rear bumper inner support of this embodiment includes a support rear face 11, a support front face 14, a plurality of collapse ribs 12, and a pair of support side faces 13. The support rear face 11 is opposite to the support front face 14, and the pair of support side faces 13 are symmetrically arranged between the support rear face 11 and the support front face 14. A first end of the support side face 13 is connected with the support rear face 11, a second end of the support side face 13 is connected with the support front face 14. The support rear face 11, the support side faces 13 and the support front face 14 form a truss. The collapse ribs 12 are arranged between the pair of support side faces 13. A first end of the collapse rib 12 is connected with the support rear face 11, and a second end of the collapse rib 12 is connected with the support front face 14, and the rear bumper inner support is symmetrical in Y direction. The support rear face 11 can transmit the impact force to the collapse ribs 12, and the collapse ribs 12 can deform and collapse.

The collapsible rear bumper inner support in this embodiment could in front contact with the collision device, and absorbs energy through the deformation and collapse of the collapse ribs 12. According to the collapsible rear bumper inner support in this embodiment, during the front collision test of the rear bumper at 10km/h, the collapse ribs 12 can quickly collapse and crush, absorb the impact energy, fall off from the rear bumper inner support, release space and absorb the impact energy, have high collapse efficiency, and prevent the impact energy from being transmitted to the support front face 14, thereby protecting the rear wall metal panel 2 of the vehicle body from deformation. Compared with the prior art, the rear bumper inner support in this embodiment has no special requirements on the height of the tailgate split, and does not need to leave space between the rear wall metal panel 2 and the rear bumper mask 3 as well. The collapsible rear bumper inner support in the embodiment of the present disclosure does not affect the modeling style, and at the same time, on the premise of ensuring the convenience of taking and placing items in the luggage compartment and the utilization rate of the rear space of the vehicle will not be affected, the problem of deformation and damage of the rear wall sheet metal caused by the rear bumper inner support can not be collapsed effectively during the front impact test of the rear bumper of the vehicle at 10km/h can be solved, which can meet the requirements of modeling intention, the increase of the luggage compartment space, and the convenience of taking and placing luggage articles at the same time.

As a specific embodiment, the support rear face 11, the support side faces 13 and the support front face 14 form a rectangular truss, so as to uniformly distribute the impact energy and symmetrically transfer it to the front of the rear bumper inner support, so that the collapse ribs 12 can effectively and fully deform and collapse.

It should be noted that, in some other embodiments, the support rear face 11, the support side faces 13 and the support front face 14 can also form trusses of other shapes, and are not limited to the above-mentioned rectangular trusses, as long as they can realize the same functions as those in the embodiments of the present disclosure.

As a specific embodiment, the collapse rib 12 has a first force-bearing area and a second force-bearing area. When the rear bumper inner support is impacted, the force exerted on the first force-bearing area is greater than that on the second force-bearing area, so that it can deform and collapse quickly. There may be one or more first force-bearing areas.

As a specific embodiment, the collapse rib 12 has a V-shaped structure, and tips at bend portions of the V-shaped structures face toward an end of the rear bumper inner support along the length direction. Specifically, for the collapse ribs 12 located at the left portion of the rear bumper inner support, the tips of the bending portions face to the left end of the rear bumper inner support, and for the collapse ribs 12 located on the right portion of the rear bumper inner support, the tips of the bending portions face to the right end of the rear bumper inner support; or, for the collapse rib 12 located at the left portion of the rear bumper inner support, the tips of the bending portions face to the right end of the rear bumper inner support, and for the collapse rib 12 located at the right portion of the rear bumper inner support, the tips of the bending portions face to the left end of the rear bumper inner support. The tip of the bending portion of the V-shaped structure is the first force-bearing area, and other areas outside the bending portions are the second force-bearing area. When subjected to an impact force, the bending portion is the first portion to deform and fragment, and the "V" shape also play a guide role. Preferably, the collapse ribs 12 can be evenly distributed along the length direction of the rear bumper inner support, so as to evenly distribute the impact force. During the front collision test of the rear bumper inner support at 10km/h, the collapse rib 12 rapidly deforms at the tip of the V-shaped structure, collapses, and shatters to absorb the impact energy, thus protecting the rear wall metal panel 2 of the vehicle body from deformation. In this embodiment, the structure of the rear bumper inner support is optimized, and using symmetrical V-shaped collapse rib. At the same time, the X-direction dimension of the mounting surface can be minimized through the structure optimization, thereby ensuring the convenience of taking and placing items from the luggage compartment and the utilization rate of the rear space of the vehicle are not affected, which can meet the requirements of styling intention, improving luggage compartment space and the convenience of taking and placing items at the same time.

Those having ordinary skill in the art can understand that, in some other embodiments, the structure and arrangement of the collapse ribs 12 can be appropriately changed according to actual needs, as long as they can realize the same functions as those in the embodiments of the present disclosure.

As a specific embodiment, the material of the collapse rib 12 can be a reinforced composite material, so that it has better buffering and energy-absorbing effects during a collision. As a nonlimiting example, the collapse rib 12 may be made of polypropylene plastic (PP-GF30) containing 30% glass fibers, or polycarbonate and acrylonitrile-butadiene-styrene copolymer and mixture (PC/ABS), or polyethylene glycol and propylene oxide copolymer (PEP).

On the premise of ensuring the convenience of taking and placing items in the luggage compartment and the utilization rate of the rear space of the vehicle, the rear bumper inner support in this embodiment absorbs the impact energy through the rapid collapse and fragmentation of the collapse rib 12, and protects the rear wall metal panel 2 of the vehicle body from deformation. Moreover, compared with the rear bumper inner support in the prior art, the rear bumper inner support in this embodiment is lighter in weight and lower in cost.

As a specific embodiment, continue to refer to FIG. 1, the support front face 14 is provided a positioning pin 16, and the positioning pin 16 is used to position the rear bumper inner support on the rear wall metal panel 2 of the vehicle body.

As a specific embodiment, continue to refer to Fig. 1, the support front face 14 is provided a plurality of upper installation structures 15, for connecting with the rear wall metal panel of the vehicle body. The structure of the upper installation structure 15 can be set according to actual needs. The upper installation structure 15 is provided with a first installation hole, and bolts welded on the rear wall metal panel 2 of the vehicle body pass through the first installation holes and are fixedly connected by fasteners. Specifically, the fasteners may be flange nuts, and those of ordinary skill in the art may use other fasteners to realize the connection between the support front face 14 and the rear wall metal panel 2 of the vehicle body according to requirements.

As a specific embodiment, the support front face 14 is provided with a plurality of lower installation structures 19, for connecting with the rear wall metal panel 2 of the vehicle body. The structure of the lower installation structure 19 can be set according to actual needs. A horizontal plane where the lower installation structure 19 locates is lower than a horizontal plane where the upper installation structure 15 locates, and the lower installation structure 19 is provided with a second installation hole. Bolts welded on the rear wall metal panel 2 of the vehicle body pass through the second installation holes and are fixedly connected by fasteners. Specifically, the fasteners may be flange nuts, and those of ordinary skill in the art may use other fasteners to realize the connection between the support front face 14 and the rear wall metal panel 2 of the vehicle body according to requirements.

As a specific embodiment, the upper installation structure 15 and the lower installation structure 19 are arranged alternately to ensure that the connection between the support front face 14 and the rear wall metal panel 2 of the vehicle body is stable and reliable.

As a specific embodiment, the support front face 14 is provided with a plurality of upper clamping structures 17 for connecting with the rear bumper mask 3. The upper clamping structure 17 is engaged with the back of the rear bumper mask 3, specifically, the back of the rear bumper mask 3 is provided with a groove structure matching with the upper engaging structure 17, so that the upper engaging structure 17 engages with the groove structure.

Specifically, the upper clamping structure 17 may be a clamping tongue, and the clamping tongue engages with the groove structure. The clamping structure is simple, convenient to connect, and reliable to fix. Those of ordinary skill in the art can understand that, in some other embodiments, the upper engaging structure 17 can also be set as other structures, as long as they can realize the same function as that in the embodiment of the present disclosure.

As a specific embodiment, the support front face 14 is provided with a plurality of lower clamping structure 18 for connecting with the rear bumper mask 3, and a horizontal plane where the lower clamping structure 18 locates is lower than a horizontal plane where the upper clamping structure 17 locates. The lower clamping structure 18 is engaged with the back of the rear bumper mask 3. Specifically, the back of the rear bumper mask 3 can be provided with a groove structure matching with the lower clamping structure 18, so that the lower clamping structure 18 engages with the groove structure.

Specifically, the lower clamping structure 18 can be a clamping tongue, and the clamping tongue engages with the groove structure. The clamping structure is simple, convenient to connect, and reliable to fix. Those of ordinary skill in the art can understand that, in some other embodiments, the lower engaging structure 18 can also be set as other structures, as long as the same they can realize the same function as that in the embodiment of the present disclosure.

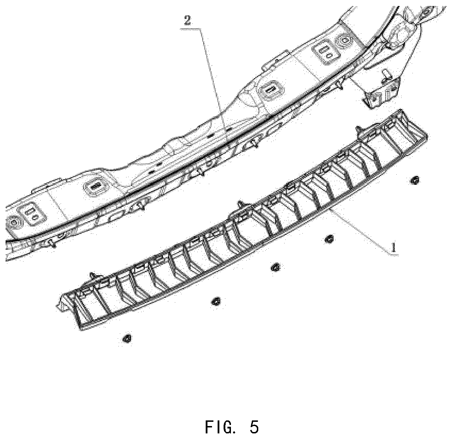

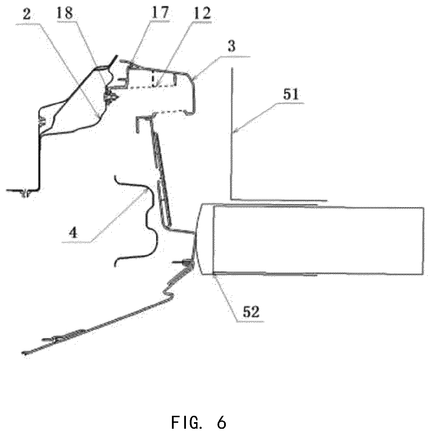

As a specific embodiment, the lower clamping structure 18 and the upper clamping structure 17 are arranged alternately, which can ensure that the connection between the support front face 14 and the rear bumper mask 3 is stable and reliable. The assembly view of the collapsible rear bumper inner support is shown in Fig. 5 and Fig. 6.

As a specific embodiment, it also includes a support member for supporting the rear bumper inner support. The specific structure of the support member can be set according to actual needs. A first end of the support member is connected to the support rear face 11. A second end of the support member is connected to the support front face 14, the support member is close to the support side face 13, and can strengthen the structural strength of the rear bumper inner support.

The foregoing embodiments of the present disclosure have the following advantages:
1) During the front collision test of the rear bumper at 10km/h, the collapse ribs of the collapsible rear bumper inner support in the embodiment of the present disclosure can quickly collapse and crash, absorb the impact energy, fall off from the rear bumper inner support, release space and absorb impact energy, and have high collapse efficiency, thereby protecting the rear wall metal panel of the vehicle body from deformation.
2) The rear bumper inner support of the present disclosure makes front contact with the collision device, and absorbs energy through the rapid collapse of the collapse ribs. It has no special requirements for the height of the tailgate split, and does not require to leave a large space between the rear wall metal panel and the rear bumper mask. Compared with the prior art, it can improve the degree of freedom in the design of the vehicle, and simultaneously meet the requirements of the styling intention, improving luggage compartment space, and the convenience of picking and placing items.
3) Compared with the prior art, the rear bumper inner support in the embodiment of the present disclosure is lighter in weight and lower in cost.

Another embodiment of the present disclosure provides a rear bumper, which includes the collapsible rear bumper inner support in the above embodiment.

For the rear bumper in this embodiment, the process of collapsing and absorbing energy during the collision process includes: the rear bumper mask 3 contacts the lower portion 52 of the collision device, the rear bumper mask 3 deforms, and the lower portion 52 of the collision device contacts the rear anti-collision beam 4, the rear anti-collision beam 4 is deformed, the impact energy is attenuated, and the lower portion 51 of the collision device is in contact with the support rear face 11 of the rear bumper inner support; the impact force is transmitted to the collapse ribs 12 through the support rear face 11, and the support rear face 11 and the collapse ribs 12 are quickly broken, and fall off from the rear bumper inner support to absorb the impact energy and form a safety gap between the lower portion 51 of the collision device and the front support front face 14, to prevent the rear wall metal panel 2 and the front support front face 14 from contacting with the lower portion 51 of the collision device, while the rear anti-collision beam 4 continues to deform and absorb energy until the collision ends. Since the collapsible rear bumper inner support has the above-mentioned technical effects, the rear bumper with the collapsible rear bumper inner support should also have the same technical effect, and will not be repeated here.

Another embodiment of the present disclosure also provides a vehicle, which includes the rear bumper in the above embodiment. Since the above-mentioned rear bumper has the above-mentioned technical effects, the vehicle with the above-mentioned rear bumper should also have the same technical effect, and will not be repeated here.

The above descriptions are only preferred embodiments of the present disclosure, and it should be pointed out that for those of ordinary skill in the art, without departing from the principle of the present disclosure, some improvements and modifications can also be made, and these improvements and modifications are also considered to be included in the protection scope of the present disclosure.

## Claims

1. A collapsible inner support for a rear bumper, comprising a support rear face (11), a support front face (14), a plurality of collapse ribs (12) and a pair of support side faces (13);
the support rear face (11) being opposite to the support front face (14), and the pair of the support side faces (13) being symmetrically arranged between the support rear face (11) and the support front face (14), a first end of the support side face (13) being connected with the support rear face (11), a second end of the support side face (13) being connected with the support front face (14), and the support rear face (11), the support side faces (13) and the support front face (14) form a truss;
the plurality of collapse ribs (12) being arranged between the pair of support side faces (13), a first end of the collapse rib (12) being connected to the support rear face (11), and a second end of the collapse rib (12) being connected to the support front face (14), and the rear bumper inner support being symmetrical in the length direction of the support;
**characterized in that**
each of the plurality of collapse ribs (12) having a V-shaped structure, and a tip of the V-shaped structure facing toward an end of the inner support along a length direction.

2. The collapsible inner support according to claim 1, wherein the collapse ribs (12) are evenly distributed along a length direction of the collapsible inner support.

3. The collapsible inner support according to claim 1, wherein the support rear face (11), the support side faces (13) and the support front face (14) form a rectangular truss.

4. The collapsible inner support according to claim 1, wherein the support front face (14) is provided with a positioning pin (16) for positioning the collapsible inner support on a rear wall sheet metal (2) of a vehicle body.

5. The collapsible inner support according to claim 1, wherein, the support front face (14) is provided with a plurality of upper installation structures (15) for connecting with a rear wall sheet metal (2) of a vehicle body, the upper installation structure (15) is provided with a first installation hole, and bolts welded on the rear wall sheet metal (2) pass through the first installation holes and are fixed by fasteners.

6. The collapsible inner support according to claim 5, wherein the support front face (14) is provided with a plurality of lower installation structures (19) for connecting with the rear wall sheet metal (2) of the vehicle body, a horizontal plane where the lower installation structure (19) locates is lower than a horizontal plane where the upper installation structure (15) locates, the lower installation structure (19) is provided a second installation hole, bolts welded on the rear wall sheet metal (2) of the vehicle body pass through the second installation holes and are fixed by fasteners.

7. The collapsible inner support according to claim 6, wherein the upper installation structures (15) and the lower installation structures (19) are arranged alternately.

8. The collapsible inner support according to claim 6, wherein the fastener is a flange nut.

9. The collapsible inner support according to claim 1, wherein the support front face (14) is provided with a plurality upper clamping structures (17) for connecting with a rear bumper mask (3), the upper clamping structure (17) is configured for engaging with a back of the rear bumper mask (3).

10. The collapsible inner support according to claim 9, wherein the support front face (14) is provided with a plurality of lower clamping structures (18) for connecting with the rear bumper mask (3), a horizontal plane where the lower clamping structure (18) locates is lower than a horizontal plane where the upper clamping structure (17) locates, and the lower clamping structure (18) is configured for engaging with the back of the rear bumper mask (3).

11. The collapsible inner support according to claim 10, wherein the lower clamping structures (18) and the upper clamping structures (17) are arranged alternately.

12. The collapsible inner support according to claim 1, further comprising a support member for supporting the collapsible inner support, a first end of the support member is connected to the support rear face (11), a second end of the support member is connected with the support front face (14), and the support member is close to the support side face (13).

13. A rear bumper, **characterized in that** comprising the collapsible inner support according to any one of claims 1-12.

14. A vehicle, **characterized in that** comprising the rear bumper according to claim 13.

## Patentansprüche

1. Kollabierbarer innerer Träger für einen Heckstoßfänger, der eine hintere Trägfläche (11), eine vordere Trägfläche (14), eine Vielzahl von Kollapsrippen (12) und ein Paar seitlicher Trägflächen (13) umfasst;
wobei die hintere Tragfläche (11) der vorderen Tragfläche (14) gegenüberliegt und das Paar seitlicher Tragflächen (13) symmetrisch zwischen der hinteren Tragfläche (11) und der vorderen Tragfläche (14) angeordnet ist, wobei ein erstes Ende der seitlichen Tragfläche (13) mit der hinteren Tragfläche (11) verbunden und ein zweites Ende der seitlichen Tragfläche (13) mit der vorderen Tragfläche (14) verbunden ist, und wobei die hintere Tragfläche (11), die seitlichen Tragflächen (13) und die vordere Tragfläche (14) ein Fachwerk bilden;
wobei die Vielzahl von Kollapsrippen (12) zwischen dem Paar von seitlichen Tragflächen (13) angeordnet ist, wobei ein erstes Ende der Kollapsrippe (12) mit der hinteren Tragfläche (11) verbunden ist und ein zweites Ende der Kollapsrippe (12) mit der vorderen Tragfläche (14) verbunden ist, und wobei der innere Träger des Heckstoßfängers in Längenrichtung des Trägers symmetrisch ist,
**dadurch gekennzeichnet, dass**
jede der Vielzahl von Kollapsrippen (12) eine V-förmige Struktur hat, wobei eine Spitze der V-förmigen Struktur zu einem Ende des inneren Trägers entlang einer Längenrichtung weist.

2. Kollabierbarer innerer Träger nach Anspruch 1, wobei die Kollapsrippen (12) gleichmäßig entlang einer Längenrichtung des kollabierbaren inneren Trägers verteilt.

3. Kollabierbarer innerer Träger nach Anspruch 1, wobei die hintere Trägfläche (11), die seitlichen Trägflächen (13) und die vordere Trägfläche (14) ein rechteckiges Fachwerk bilden.

4. Kollabierbarer innerer Träger nach Anspruch 1, wobei die vordere Trägfläche (14) mit einem Positionierungsstift (16) zum Postionieren des kollabierbaren inneren Trägers an einer Metallplatte (2) der Rückwand einer Fahrzeugkarosserie versehen ist.

5. Kollabierbarer innerer Träger nach Anspruch 1, wobei die vordere Trägfläche (14) mit einer Vielzahl von oberen Installationsstrukturen (15) zum Verbinden mit einer Metallplatte (2) der Rückwand einer Fahrzeugkarosserie versehen ist, wobei die obere Installationsstruktur (15) mit einem ersten Installationsloch versehen ist, und wobei Bolzen, die auf der Metallplatte (2) der Rückwand geschweißt sind, durch die ersten Installationslöcher hindurchgehen und durch Befestigungsmittel befestigt sind.

6. Kollabierbarer innerer Träger nach Anspruch 5, wobei die vordere Trägfläche (14) mit einer Vielzahl von unteren Installationsstrukturen (19) zum Verbinden mit der Metallplatte (2) der Rückwand der Fahrzeugkarosserie versehen ist, wobei eine horizontale Ebene, in der die untere Installationsstruktur (19) lokalisiert ist, niedriger ist als eine horizontale Ebene, in der die obere Installationsstruktur (15) lokalisiert ist, wobei die untere Installationsstruktur (19) mit einem zweiten Installationsloch versehen ist, wobei Bolzen, die auf der Metallplatte (2) der Rückwand der Fahrzeugkarosserie geschweißt sind, durch die zweiten Installationslöcher hindurchgehen und durch Befestigungsmittel befestigt sind.

7. Kollabierbarer innerer Träger nach Anspruch 6, wobei die obere Installationsstruktur (15) und die untere Installationsstruktur (19) alternativ angeordnet sind.

8. Kollabierbarer innerer Träger nach Anspruch 6, wobei das Befestigungsmittel eine Flanschmutter ist.

9. Kollabierbarer innerer Träger nach Anspruch 1, wobei die vordere Trägfläche (14) mit einer Vielzahl von oberen Klemmstrukturen (17) zum Verbinden mit einer Heckstoßfängerblende (3) versehen ist, wobei die obere Klemmstruktur (17) so konfiguriert ist, dass sie mit einer Rückseite der Heckstoßfängerblende (3) in Eingriff kommt.

10. Kollabierbarer innerer Träger nach Anspruch 9, wobei die vordere Trägfläche (14) mit einer Vielzahl von unteren Klemmstrukturen (18) zum Verbinden mit der Heckstoßfängerblende (3) versehen ist, wobei eine horizontale Ebene, in der die untere Klemmstruktur (18) lokalisiert ist, niedriger ist als eine horizontale Ebene, in der die obere Klemmstruktur (17) lokalisiert ist, und wobei die untere Klemmstruktur (18) so konfiguriert ist, dass sie mit der Rückseite der Heckstoßfängerblende (3) in Eingriff kommt.

11. Kollabierbarer innerer Träger nach Anspruch 10, wobei die untere Klemmstruktur (18) und die obere Klemmstruktur (17) alternativ angeordnet sind.

12. Kollabierbarer innerer Träger nach Anspruch 1, umfassend ferner ein Stützelement zum Stützen des kollabierbaren inneren Trägers, wobei ein erstes Ende des Stützelements mit der hinteren Trägfläche (11) verbunden ist, während ein zweites Ende des Stützelements mit der vorderen Trägfläche (14) verbunden ist, wobei das Stützelement nahe an der seitlichen Tragfläche (13) liegt.

13. Heckstoßfänger, **dadurch gekennzeichnet, dass** er den kollabierbaren inneren Träger gemäß einem der Ansprüche 1 bis 12 umfasst.

14. Fahrzeug, **dadurch gekennzeichnet, dass** es den Heckstoßfänger gemäß Anspruch 13 umfasst.

## Revendications

1. Support interne pliable pour un pare-chocs arrière, comprenant une face arrière de support (11), une face avant de support (14), une pluralité de nervures pliables (12) et une paire de faces latérales de support (13) ;
la face arrière de support (11) étant opposée à la face avant de support (14), et la paire de faces latérales de support (13) étant disposées symétriquement entre la face arrière de support (11) et la face avant de support (14), une première extrémité de la face latérale de support (13) étant reliée à la face arrière de support (11), une seconde extrémité de la face latérale de support (13) étant reliée à la face avant de support (14), et la face arrière de support (11), les faces latérales de support (13) et la face avant de support (14) formant un treillis ;
la pluralité de nervures pliables (12) étant disposées entre la paire de faces latérales de support (13), une première extrémité de la nervure pliable (12) étant reliée à la face arrière de support (11), et une seconde extrémité de la nervure pliable (12) étant reliée à la face avant de support (14), et le support interne de pare-chocs arrière étant symétrique dans la direction de la longueur du support ;
**caractérisé en ce que**
chacune de la pluralité de nervures pliables (12) a une structure en forme de V, et une pointe de la structure en forme de V faisant face à une extrémité du support interne dans une direction de la longueur.

2. Support interne pliable selon la revendication 1, dans lequel les nervures pliables (12) sont réparties uniformément dans une direction de la longueur du support interne pliable.

3. Support interne pliable selon la revendication 1, dans lequel la face arrière de support (11), les faces latérales de support (13) et la face avant de support (14) forment un treillis rectangulaire.

4. Support interne pliable selon la revendication 1, dans lequel la face avant de support (14) est pourvue d'une broche de positionnement (16) destinée à positionner le support interne pliable sur une tôle de paroi arrière (2) d'une carrosserie de véhicule.

5. Support interne pliable selon la revendication 1, dans lequel la face avant de support (14) est pourvue d'une pluralité de structures d'installation supérieures (15) pour être reliées à la tôle de paroi arrière (2) d'une carrosserie de véhicule, la structure d'installation supérieure (15) est pourvue d'un premier trou d'installation, et des boulons soudés sur la tôle de paroi arrière (2) passent à travers les premiers trous d'installation et sont fixés par des attaches.

6. Support interne pliable selon la revendication 5, dans lequel la face avant de support (14) est pourvue d'une pluralité de structures d'installation inférieures (19) pour être reliées à la tôle de paroi arrière (2) de la carrosserie de véhicule, un plan horizontal où se trouve la structure d'installation inférieure (19) est inférieur à un plan horizontal où se trouve la structure d'installation supérieure (15), la structure d'installation inférieure (19) est pourvue d'un second trou d'installation, des boulons soudés sur la tôle de paroi arrière (2) de la carrosserie de véhicule passent à travers les secondes trous d'installation et sont fixés par des attaches.

7. Support interne pliable selon la revendication 6, dans lequel les structures d'installation supérieures (15) et les structures d'installation inférieures (19) sont disposées en alternance.

8. Support interne pliable selon la revendication 6, dans lequel l'attache est un écrou de bride.

9. Support interne pliable selon la revendication 1, dans lequel la face avant de support (14) est pourvue d'une pluralité de structures de serrage supérieures (17) pour être reliées à un masque de pare-chocs arrière (3), la structure de serrage supérieure (17) est conçue pour venir en prise avec un dos du masque de pare-chocs arrière (3).

10. Support interne pliable selon la revendication 9, dans lequel la face avant de support (14) est pourvue d'une pluralité de structures de serrage inférieures (18) pour être reliées au masque de pare-chocs arrière (3), un plan horizontal où se trouve la structure de serrage inférieure (18) est inférieur à un plan horizontal où se trouve la structure de serrage supérieure (17), et la structure de serrage inférieure (18) est conçue pour venir en prise avec le dos du masque de pare-chocs arrière (3).

11. Support interne pliable selon la revendication 10, dans lequel les structures de serrage inférieures (18) et les structures de serrage supérieures (17) sont disposées en alternance.

12. Support interne pliable selon la revendication 1, comprenant en outre un élément de support destiné à soutenir le support interne pliable, une première extrémité de l'élément de support étant reliée à la face arrière de support (11), une seconde extrémité de l'élément de support étant reliée à la face avant de support (14), et l'élément de support étant proche de la face latérale de support (13).

13. Pare-chocs arrière, **caractérisé en ce qu'**il comprend le support interne pliable selon l'une quelconque des revendications 1 à 12.

14. Véhicule, **caractérisé en ce qu'**il comprend le pare-chocs arrière selon la revendication 13.
